# EUROPEAN PATENT APPLICATION

(11) **EP 4 501 463 A1**
(43) Date of publication of application: **05.02.2025**
(21) Application number: 24189627.3
(22) Date of filing: 19.07.2024
(51) Int. Cl.: B05B 7/00, C04B 41/45, F01N 3/021, B05B 12/18, B05B 7/14, B01J 35/56

(54) **TREATMENT OF PARTICULATE FILTERS**

(30) Priority: 02.08.2023 US 202363517117 P
(71) Applicant: Johnson Matthey Plc, London EC4A 4AB (GB)
(72) Inventor: NISBET, Jordan, Royston, SG8 5HE (GB); THOMSON, Craig, Royston, SG8 5HE (GB)
(74) Representative: Boult Wade Tennant LLP

(57) **Abstract**

A method and apparatus (1) for applying a dry powder to a porous substrate (10):
a) locating the porous substrate (10) in a holder (2) such that an inlet face (11) is in communication with an inlet chamber (15) and an outlet face (12) is in communication with a vacuum generator;
b) establishing a gas flow through the porous substrate (10) from the inlet face (11) to the outlet face (12) by using the vacuum generator to apply a pressure reduction to the outlet face (12);
c) spraying the dry powder to entrain it in the gas flow and pass it through the inlet face (11) to contact a porous structure (13) of the porous substrate (10); and
d) activating a ring air blade (30) to blow off dry powder accumulated on the inlet face (11), wherein the vacuum generator remains active during activation of the ring air blade (30) such that the dry powder blown off the inlet face (11) is entrained in the gas flow and passes through the inlet face (11) of the porous substrate (10).

## Description

The present disclosure relates to methods and apparatus for applying a dry powder to a porous substrate. In some embodiments the invention relates to improvements in methods and apparatus for coating a filter comprising a porous substrate having an inlet face and an outlet face, wherein the inlet face is separated from the outlet face by a porous structure. The filter may be a wall-flow filter.

### Background to the Disclosure

EP 4013954 A1 describes a method and apparatus for treating a filter for filtering particulate matter from exhaust gas, the method comprising the steps of: a) containing a dry powder in a reservoir; b) locating a filter in a filter holder, the filter comprising a porous substrate having an inlet face and an outlet face, the inlet face and the outlet face being separated by a porous structure; c) establishing a primary gas flow through the porous structure of the filter by applying a pressure reduction to the outlet face of the filter; d) transferring the dry powder from the reservoir to a spray device located upstream of the inlet face of the filter; and e) spraying the dry powder, using the spray device, towards the inlet face of the filter such that the dry powder is entrained in the primary gas flow and passes through the inlet face of the filter to contact the porous structure.

While the method and apparatus have proved effective at loading dry powder into the porous structure a build up of the dry powder on the inlet face of the filter can occur during spraying. This can result in reduced efficiency in the utilisation of the dry powder and increased rejection rates of the filters due to potential obstruction of the channels by the build-up of powder at the inlet face following calcination of the filter.

WO 2021/160572 A1 describes the cleaning of dry deposits of coatings on wall-flow filter plugs by means of ultrasound. In particular, a sonotrode and additional reflectors are used to generate sound pressure waves to clean dry deposits from an inlet face of a wall-flow filter.

However, the use of an ultrasonic sonotrode may be expensive in practice and would require careful set-up, maintenance, and operator knowledge to use effectively. It may be complicated in practice to ensure that the sonotrode is guided across the entire surface of the inlet face and while additional reflectors may be used, these add to the expense of the system and may also inhibit or obstruct the incoming flows of gas and dry powder during spraying, potentially resulting in reduced uniformity of application of the dry powder.

The present disclosure seeks to tackle at least some of the problems associated with the prior art or at least to provide a commercially acceptable alternative solution thereto.

### Summary of the Disclosure

In a first aspect the present disclosure provides a method of applying a dry powder to a porous substrate, the porous substrate having an inlet face and an outlet face with the inlet face and the outlet face being separated by a porous structure, the method comprising the steps of:
a) locating the porous substrate in a holder such that the inlet face is in communication with an inlet chamber and the outlet face is in communication with a vacuum generator;
b) establishing a gas flow through the porous substrate from the inlet face to the outlet face by using the vacuum generator to apply a pressure reduction to the outlet face of the porous substrate;
c) spraying the dry powder into or within the inlet chamber such that dry powder is entrained in the gas flow and passes through the inlet face of the porous substrate to contact the porous structure; and
d) activating a ring air blade to blow off dry powder accumulated on the inlet face of the porous substrate, wherein the vacuum generator remains active during activation of the ring air blade such that the dry powder blown off the inlet face is entrained in the gas flow and passes through the inlet face of the porous substrate.

Advantageously, use of the ring air blade provides a practical, easy to operate and low maintenance means for cleaning the inlet face of the porous substrate. The ring air blade may not require any electrical power in use and does not cause any obstruction to the gas flow as it approaches the inlet face. Beneficially, keeping the vacuum generator active during operation of the ring air blade increase the utilisation of the dry powder by causing the dry powder to enter through the inlet face into the porous structure.

In some embodiments the ring air blade is activated to blow off dry powder after the spraying of the dry powder into or within the inlet chamber has ceased. Alternatively or additionally, the ring air blade may be activated during the spraying of the dry powder into or within the inlet chamber.

The ring air blade may be orientated to direct a gas flow at a downward angle onto the inlet face of the porous substrate. For example, the ring air blade may comprise a shaped outlet that uses the Coanda effect to deflect a radially-inward flow of gas downward to produce a conical flow of gas that may be directed towards the inlet face.

The ring air blade may emit a 360° or substantially 360° flow of gas. In some embodiments the ring air blade may comprise two semi-circular elements each supplied by a gas inlet. When the two elements are conjoined a complete ring encompassing the inlet face may be formed. Where two elements are used the outlet opening may not extend completing for 360° due to the presence of end walls. However, it will be appreciated that the gas flow emitted will still extend around approximately 360°.

The plane of a gas outlet of the ring air blade may be positioned between 1 and 10cm above the plane of the inlet face.

The ring air blade may be located within the inlet chamber or between the inlet chamber and the inlet face of the porous substrate or arranged in series between portions of the inlet chamber. In some embodiments the ring air blade may be smaller in outer diameter than the inlet chamber and be located concentrically within the inlet chamber. In other embodiments the ring air blade may have a similar outer diameter size to that of the inlet chamber and may be stacked in series between the inlet chamber and the inlet face of the porous substrate.

The inlet chamber may be, for example, a tube, optionally with an open upper end. A lower end of the tube may be in fluid communication with the inlet face of the porous substrate.

The ring air blade may be supplied with gas at a pressure of up to 8 bar, optionally at 3 to 8 bar, optionally at 3 to 6 bar, optionally at 1, 2, 3, 4, 5, 6, 7 or 8 bar. In some embodiments a minimum pressure of 2 bar has been found to be effective at blowing off the dry powder.

The ring air blade may emit gas at a flow rate of greater than 150 litres per minute, optionally greater than 200 litres per minute, optionally greater than 250 litres per minute.

The dry powder may be sprayed into or within the inlet chamber using a spray device, optionally a spray nozzle. The spray nozzle may use a flow of gas to entrain the dry powder during spraying. For example, the spray device may comprise a compressed air gun. A non-limiting example of a suitable compressed air gun is the STAR Professional gravity feed spray gun 1.4mm, part no. STA2591100C.

The spray device may be located at a distance of 50 to 250cm from the inlet face, optionally at a distance of 50 to 200cm, optionally at a distance of 100 to 200cm, optionally at a distance of 150 to 200cm, optionally at a distance of 200cm from the inlet face.

The gas flow generated by the vacuum generator may be a flow of air or other suitable gas. The ring air blade may be supplied by a pressurised flow of air or other suitable gas.

In a second aspect the present disclosure provides an apparatus for applying a dry powder to a porous substrate, the porous substrate having an inlet face and an outlet face with the inlet face and the outlet face being separated by a porous structure, the apparatus comprising:
a) a holder for holding the porous substrate;
b) an inlet chamber in communication with the inlet face;
c) a vacuum generator in communication with the outlet face for establishing a gas flow through the porous substrate from the inlet face to the outlet face;
d) a spray device for spraying the dry powder into or within the inlet chamber; and
e) a ring air blade.

As noted above, the ring air blade may be orientated to direct a gas flow at a downward angle onto the inlet face of the porous substrate, while the porous substrate is located in the holder, to blow off dry powder that may accumulate on the inlet face of the porous substrate. The ring air blade may be configured to emit a 360° or substantially 360° flow of gas. The plane of a gas outlet of the ring air blade may be positioned between 1 and 10cm above the plane of the inlet face. The ring air blade may be located within the inlet chamber or between the inlet chamber and the inlet face of the porous substrate. The spray device may comprise a spray nozzle. The spray device may be located at a distance of 50 to 250cm from the inlet face, optionally at a distance of 50 to 200cm, optionally at a distance of 100 to 200cm, optionally at a distance of 150 to 200cm, optionally at a distance of 200cm.

In this specification the term "dry powder" refers to a particulate composition that is not suspended or dissolved in a liquid. It is not meant to necessarily imply a complete absence of all water molecules. The dry powder is preferably free-flowing.

In some embodiments the dry powder may comprise or consist of a silicone resin. Silicone resins are known and are branched, cagelike oligosiloxanes and polysiloxanes. The branching in silicone resins results from the presence of so called "T" and/or "Q" units in the resin which refer to RSiO₃ and SiOa units (R is an alkyl or aryl group), respectively, wherein further silicon units are bonded to the oxygen atoms. "M" units, i.e., R₃SiO unit are terminal units wherein the oxygen atom provides a link to the resin backbone. Similarly, "D" units, i.e., R₂SiO₂ units provide linear connectivity across the two oxygen atoms. One well known nonbranched and linear polysiloxane is polydimethylsiloxane (PDMS; i.e., (Me₂SiO)ₙ).

Preferably, the silicone resin is a solid at room temperature (e.g., about 25°C). Accordingly, the silicone resin preferably has a melting point of greater than 25°C, preferably greater than 30°C, more preferably greater than 35°C. Preferably, the melting point of the silicone resin is less than 100°C, preferably less than 95°C, less than 90°C, less than 85°C or less than 80°C. Non-branched polysiloxanes such as PDMS typically have lower melting points than silicone resins which are branched. For example, the melting point of PDMS is about-40°C. WO 2011/151711 discloses binding powder in place by treatment with polydimethylsiloxane which forms silica when hydrolysed at sufficiently high temperature.

Similarly, it may be preferable that the silicone resin has a glass transition temperature (T_{g}) of greater than 30°C, preferably greater than 35°C, and/or less than 100°C, preferably less than 80°C. Without wishing to be bound by theory, it is believed that silicone resins which have such melting points and/or glass transition temperatures are particularly suited for the powder coating process, i.e., for effective particulate dispersion across the porous substrate, yet low enough to permit low temperature calcination thereby effectively and efficiently adhering inorganic particles to gas contacting surfaces of the channel walls of the porous substrate.

Preferably, the silicone resin has a molecular weight of greater than 1,000, preferably greater than 2,000, preferably greater than 5,000, preferably greater than 10,000, and/or a molecular weight of less than 500,000, preferably less than 200,000.

As used herein, molecular weight refers to the weight average molecular weight (Mw) which may be measured using any conventional means in the art. In some embodiments, the molecular weight may be relatively low since the hydrogen bonding provided by hydroxy functionalities provides the silicone resin with a sufficiently high melting point and/or glass transition temperature. Accordingly, in some embodiments the molecular weight of the silicon resin may be from 1,000 to 10,000, preferably from 1,000 to 5,000, preferably from 1,200 to 3,500, such as from 1,500 to 2,000. Silicone resins having molecular weights below 1,000 are less preferred since they are typically either liquid and not suitable for dry spraying or do not have as much branching as larger molecules which is believed to provide enhanced binding of the inorganic particles to the porous substrate.

Nevertheless, the molecular weight of the silicone resin may preferably be from 15,000 to 150,000, preferably from 20,000 to 120,000, preferably from 60,000 to 100,000. Some preferable resins have an M_{w} of from 8,000 to 15,000, some from 20,000 to 60,000 and others from 80,000 to 120,000.

It is particularly preferred that the silicone resin has the formula [RₓSiX_{y}O_{z}]ₙ, wherein R is an alkyl or aryl group, X is a functional group bonded to silicon, and wherein z is more than 1 and less than 2. As will be appreciated, n is large so as to provide an oligomer or polymer necessary for a silicone resin, particularly a resin which is solid at room temperature. Whilst dependent on the molecular mass of the R and X groups, an M_{w} of greater than 1,000 may be achieved where n is greater than 10, an M_{w} of greater than 10,000 may be achieved where n is greater than 100 and an M_{w} of greater than 100,000 may be achieved where n is greater than 1,000. Accordingly, n may preferably be greater than 10, greater than 100, greater than 1,000.

As will be appreciated, R is an alkyl or an aryl bonded to silicon and X is a non-hydrocarbon functional group bonded to silicon. Equally, since silicon is a tetravalent atom, it will be appreciated that x + y + 2z = 4. z is less than 2 since where z = 2, x and y = 0 providing silica (i.e., silicon dioxide; (SiO₂)ₙ). Similarly, z is greater than 1 since where z = 1, x + y = 2 providing a substituted polysiloxane (e.g. (RXSiO)ₙ) consisting of "D" units providing a linear resin (e.g. -O-(SiRX)-O-(SiRX)-O-). One example is polydimethylsiloxane. Accordingly, O refers to oxygen bridging two silicon atoms in the polymeric backbone of the silicone resin.

Preferably, 0 < x + y < 2, preferably 0 < x + y ≤ 1.5, preferably 0 < x + y ≤ 1. Preferably, x, y and/or x + y is greater than 0.1, preferably greater than 0.2. In one preferred embodiment, x + y is 1 providing a silicone resin known generally as a polysilsesquioxane. Preferably, y is less than 1 and/or y is less than x. Even more preferably, 2y ≤ x, preferably 5y ≤ x, preferably 10y ≤ x. In one embodiment, y is 0. For example, y is 0 where the polysilsesquioxane is a polyalkylsilsesquioxane such as polymethylsilsesquioxane (MeSiO_{3/2})ₙ.

Typically, where present, X is one or more of H, hydroxy (OH), Cl and C₁-C₆ alkoxy, preferably one or more of OH and C₁-C₆ alkoxy, preferably wherein the C₁-C₆ alkoxy is selected from methoxy (OCH₃) and ethoxy (OCH₂CH₃). In a particularly preferred embodiment, X is one or both of OH and ethoxy. However, X is a functional group which can also be a reactive functional group such as aminyl (NH₂, NR₂), epoxy, acrylate, and vinyl, though these are less preferred since the presence of hydroxy or alkoxy groups is believed to provide more effective cross-linking during calcination. As described above, any oxygen present in the terminal functional group does not contribute to "O_{z}" in the above formula which refers to silicon bridging oxygen atoms.

In some embodiments the dry powder may comprise or consist of a zeolite. Zeolites are structures formed from alumina and silica and the SAR determines the reactive sites within the zeolite structure. The zeolite may be a small pore zeolite (e.g. a zeolite having a maximum ring size of eight tetrahedral atoms), a medium pore zeolite (e.g. a zeolite having a maximum ring size of ten tetrahedral atoms) or a large pore zeolite (e.g. a zeolite having a maximum ring size of twelve tetrahedral atoms) or a combination of two or more thereof.

Examples of suitable zeolites include silicate zeolite, aluminosilicate zeolite, metal-substituted aluminosilicate zeolite, AIPO, MeAIPO, SAPO, MeAPSO, and the like. In some embodiments, the zeolites are selected from aluminosilicate, borosilicate, gallosilicate, SAPO, AIPO, MeAPSO, and MeAPO zeolites.

When the zeolite is a small pore zeolite, then the small pore zeolite may have a framework structure represented by a Framework Type Code (FTC) selected from the group comprising (e.g. consisting of) ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or combination and/or an intergrowth of two or more thereof. In some embodiments, the small pore zeolite has a framework structure selected from the group comprising (e.g. consisting of) CHA, LEV, AEI, AFX, ERI, LTA, SFW, KFI, DDR and ITE. In some embodiments, the small pore zeolite has a framework structure selected from the group comprising (e.g. consisting of) CHA and AEI. The small pore zeolite may have a CHA framework structure.

When the zeolite is a medium pore zeolite, then the medium pore zeolite may have a framework structure represented by a Framework Type Code (FTC) selected from the group comprising (e.g. consisting of) AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, SVR, SZR, TER, TON, TUN, UOS, VSV, WEI and WEN, or a mixture and/or an intergrowth of two or more thereof. In some embodiments, the medium pore zeolite has a framework structure selected from the group comprising (e.g. consisting of) FER, MEL, MFI, and STT. In some embodiments, the medium pore zeolite has a framework structure selected from the group comprising (e.g. consisting of) FER and MFI, particularly MFI. When the medium pore molecular sieve has a FER or MFI framework, then the zeolite may be ferrierite, silicalite or ZSM-5.

When the zeolite is a large pore zeolite, then the large pore zeolite may have a framework structure represented by a Framework Type Code (FTC) selected from the group comprising (e.g. consisting of) AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. In some embodiments, the large pore zeolite has a framework structure selected from the group comprising (e.g. consisting of) AFI, BEA, MAZ, MOR, and OFF. In some embodiments, the large pore zeolite has a framework structure selected from the group comprising (e.g. consisting of) BEA, MOR and FAU. When the large pore molecular has a framework structure of FTC BEA, FAU or MOR, then the zeolite may be a beta zeolite, faujasite, zeolite Y, zeolite X or mordenite.

In some embodiments, the zeolite has a framework type selected from ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AVL, AWO, AWW, BCT, BEA, BEC, BIK, BOG, BPH, BRE, CAN, CAS, SCO, CFI, SGF, CGS, CHA, CHI, CLO, CON, CZP, DAC, DDR, DFO, DFT, DOH, DON, EAB, EDI, EEI, EMT, EON, EPI, ERI, ESV, ETR, EUO, FAU, FER, FRA, GIS, GIU, GME, GON, GOO, HEU, IFR, IFY, IHW, IRN, ISV, ITE, ITH, ITW, IWR, IWW, JBW, KFI, LAU, LEV, LlO, LIT, LOS, LOV, LTA, LTL, LTN, MAR, MAZ, MEI, MEL, MEP, MER, MFI, MFS, MON, MOR, MOZ, MSO, MTF, MTN, MTT, MTW, MWF, MWW, NAB, NAT, NES, NON, NPO, NPT, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SFW, SGT, SOD, SOS, SSY, STF, STI, STT, TER, THO, TON, TSC, UEI, UFI, UOZ, USI, UTL, VET, Wl, VNI, VSV, WIE, WEN, YUG, ZON, or combinations thereof. In some embodiments, the zeolite has a framework type selected from AEI, AFT, AFV, AFX, AVL, BEA, CHA, DDR, EAB, EEI, ERI, FAU, FER, IFY, IRN, KFI, LEV, LTA, LTN, MER, MOR, MWF, MFI, NPT, PAU, RHO, RIE, RTH, SAS, SAT, SAV, SFW, TSC, and UFI.

In another embodiment, the inorganic particles are refractory oxide particles which can be based on an oxide selected from the group consisting of alumina, silica, zirconia, ceria, chromia, magnesia, calcia, titania and mixed oxides of any two or more thereof. Preferably, the refractory oxide particles comprise calcium aluminate, fumed alumina, fumed silica, fumed titania, fumed zirconia, fumed ceria, alumina aerogel, silica aerogel, titania aerogel, zirconia aerogel, ceria aerogel or a mixture thereof. The one or more fumed refractory powders (refractory oxide particles) may be produced by a pyrogenic process, for example flame pyrolysis.

In some embodiments the dry powder may comprise or consist of a metal compound for forming by thermal decomposition a metal oxide. The dry powder may consist of a single metal compound of may consist of a mixture or blend or successive doses of two or more metal compounds. The or each metal compound may contain one or more metal cations.

Where a plurality of metal cations is present these may be of the same or of different metals. The metal compound may comprise or consist of a metal hydroxide, a metal phosphate, a metal carbonate, a metal sulphate, a metal perchlorate, a metal iodide, a metal oxalate, a metal acetate, a metal chlorate or a mixture thereof. The metal of the metal compound may comprise or consist of one or more of magnesium, calcium, strontium, barium, aluminium, zirconium, manganese, lithium, iron, cobalt, nickel, copper, or gallium. The dry powder may additionally comprise a metal oxide or mixed metal oxide. Optionally the dry powder comprises 90 wt% or greater of the metal compound for forming by thermal decomposition a metal oxide and 10 wt% or less of the metal oxide or mixed metal oxide. Optionally the dry powder comprises 95 wt% or greater of the metal compound for forming by thermal decomposition a metal oxide and 5 wt% or less of the metal oxide or mixed metal oxide. Optionally the dry powder comprises 99 wt% or greater of the metal compound for forming by thermal decomposition a metal oxide and 1 wt% or less of the metal oxide or mixed metal oxide. The metal of the metal oxide or mixed metal oxide may comprise or consist of one or more of aluminium, magnesium, calcium, strontium, barium, aluminium, zirconium, manganese, lithium, iron, cobalt, nickel, copper, or gallium. Optionally the dry powder comprises or consists of a metal hydroxide, a metal phosphate, a metal carbonate or a mixture thereof. The metal hydroxide may be selected from the group consisting of magnesium hydroxide, calcium hydroxide, strontium hydroxide and barium hydroxide. The metal phosphate may be selected from the group consisting of magnesium phosphate, calcium phosphate, strontium phosphate and barium phosphate. The metal carbonate may be selected from the group consisting of magnesium carbonate, calcium carbonate, strontium carbonate and barium carbonate.

The dry powder may consist of a single powder type or a mixture of powder types. For example the dry powder may comprise or consist of a mixture of zeolite and silicone resin.

The porous substrate may, for example, a through-flow monolith or a filter. In this specification the term "filter" refers to a porous substrate that has a porous structure suitable for filtering particulate matter from exhaust gas. The porous substrate may be formed for example from sintered metal, ceramic or metal fibres etc. The filter may be of the wall-flow kind made from porous material, for example ceramic, fabricated in the form of a monolithic array of many small channels running along the length of the body. For example, the filter may be formed from cordierite, various forms of silicon carbide or aluminium titanate.

The filter may be a "bare" filter or alternatively may be one with an incorporated catalytic function ability such as oxidation, NOx-trapping, or selective catalytic reduction activity. The porous substrate may comprise a composition (known as a washcoat) that coats the porous structure of the filter. The washcoat may be a catalytic washcoat. The catalytic washcoat may comprise a catalyst, selected from the group consisting of a hydrocarbon trap, a three-way catalyst (TWC), a NOx absorber, an oxidation catalyst, a selective catalytic reduction (SCR) catalyst, a lean NOx catalyst and combinations of any two or more thereof. The catalyst, for example the TWC, NOx absorber, oxidation catalyst, hydrocarbon trap and the lean NOx catalyst, may contain one or more platinum group metals, particularly those selected from the group consisting of platinum, palladium and rhodium.

The filter may, for example, be a diesel particulate filter (DPF), a catalysed soot filter (CSF), a selective catalytic reduction filter (SCRF), a lean NOx trap filter (LNTF), a gasoline particulate filter (GPF), an ammonia slip catalyst filter (ASCF), or a combination of two or more thereof (e.g. a filter comprising a selective catalytic reduction (SCR) catalyst and an ammonia slip catalyst (ASC).

The shape and dimensions of the filter, for example properties such as the channel wall thickness and its porosity etc. may be varied depending on the intended application for the filter. The filter may be configured for use with an internal combustion engine to filter the exhaust gas emitted by the internal combustion engine. The internal combustion engine may be a gasoline spark ignition engine. However, the filter finds particular application when configured for use with an internal combustion engine in the form of a diesel or gasoline engine.

In this specification the terms "inlet" and "outlet" refer to the orientation of the porous substrate when subject to the gas flow created by the vacuum generator with the flow of gas being from the inlet face or inlet end towards the outlet face or outlet end. It will be understood that the porous substrate may adopt other orientations in subsequent treatment steps or use, for example when used in a vehicle to treat exhaust gases. For example, exhaust gas flow in use through the porous substrate may be from the "inlet" to the "outlet" or vice versa.

In this specification the term "vacuum generator" refers to an apparatus or combination of apparatus that function to produce a pressure reduction. Non-limiting examples of suitable apparatus include vacuum generators that operate on the venturi principle, vacuum pumps, for example rotary vane and liquid ring vacuum pumps, and regenerative blowers.

In this specification the term "controller" may refer to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc.

### Brief Description of the Drawings

Aspects and embodiments of the present disclosure will now be described, by way of example only, with reference to the accompanying drawings, in which:
Figure 1 is a schematic illustration of an apparatus according to the present disclosure;
Figure 2 is a schematic illustration from above of a ring air blade of the apparatus of Figure 1 and an inlet face of a porous substrate;
Figure 3 is a schematic illustration from the side of the ring air blade and porous substrate of Figure 2;
Figure 4 is a photograph of an inlet face of a porous substrate after spraying of a dry powder; and
Figure 5 is a photograph of the porous substrate of Figure 4 after operation of the ring air blade.

### Detailed Description

The skilled reader will recognise that one or more features of one aspect or embodiment of the present disclosure may be combined with one or more features of any other aspect or embodiment of the present disclosure unless the immediate context teaches otherwise.

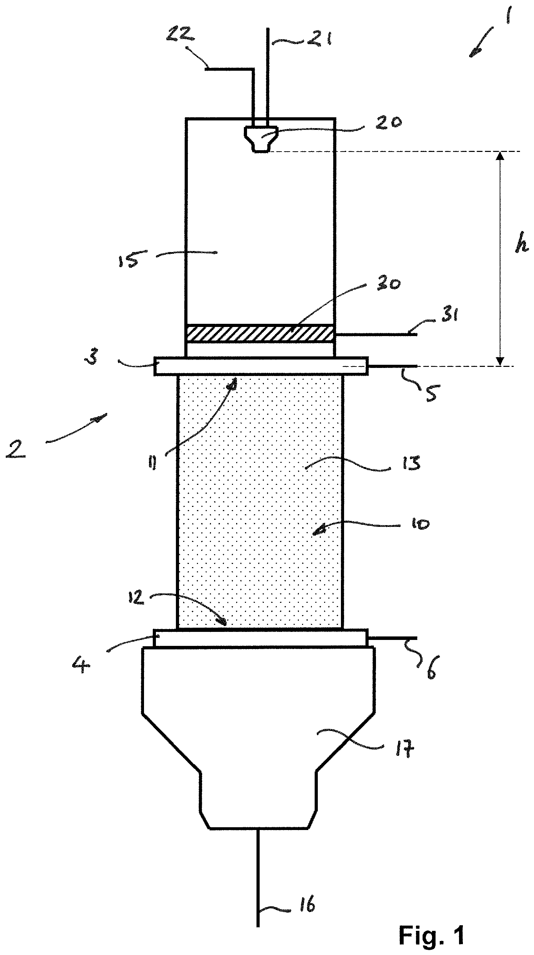

An example of an apparatus in accordance with the present disclosure will now be described with reference to Figure 1 which shows a schematic diagram of an apparatus 1 for treating a porous substrate 10 for filtering particulate matter from exhaust gas. The porous substrate 10 is of a type having an inlet face 11 and an outlet face 12, the inlet face 11 and the outlet face 12 being separated by a porous structure 13.

The apparatus 1 comprises a holder 2 for holding the porous substrate 10, an inlet chamber 15 in communication with the inlet face 11, a vacuum generator in communication with the outlet face 12 for establishing a gas flow through the porous substrate 10 from the inlet face 11 to the outlet face 12, a spray device for spraying dry powder into or within the inlet chamber 15 and a ring air blade 30.

The holder 2 may comprise means for holding securely the porous substrate 10. The holder 2 may comprise an upper inflatable collar 3 supplied by inflation line 5 and a lower inflatable collar 4 supplied by inflation line 6.

The vacuum generator may comprise a vacuum cone 17 connected via a line 16 to, for example, a regenerative blower.

The spray device may comprise a spray nozzle 20 supplied with dry powder along a powder supply line 21, for example by gravity feed. A gas feed line 22 may supply compressed gas, e.g. compressed air, to the spray nozzle 20 for entraining, mobilising and spraying the dry powder out of the spray nozzle 20. The spray nozzle 20 may be located within the inlet chamber 15 as shown in Figure 1 or alternatively located outside the inlet chamber 15 but orientated to spray the dry powder into the inlet chamber 15.

The spray nozzle 20 may be positioned at a height, h, above the plane of the inlet face 11 of the porous substrate 10. Height, h, may be 50 to 250cm, optionally 50 to 200cm, optionally 100 to 200cm, optionally 150 to 200cm, optionally 200cm.

The inlet chamber 15 may comprise a tube 15 having, optionally, an open upper end. The tube 15 may have a shape conformal to the shape of the inlet face 11 and a size that is equal to or large than the inlet face 11.

The ring air blade 30 may be located within the inlet chamber 15 as shown in Figure 1 or may be arranged in series with one or more portions of the inlet chamber 15 or located between the inlet chamber 15 and the inlet face 11. A gas supply 31 feeds pressurised gas, for example air, to the ring air blade 30.

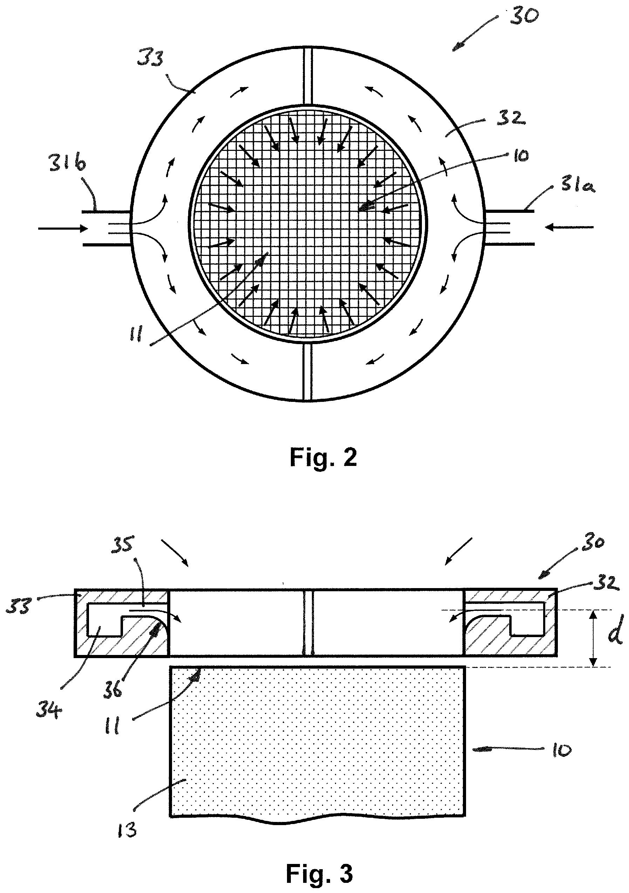

As shown in Figures 2 and 3, the ring air blade 30 may comprise two semi-circular elements 32, 33 that together form a ring shape that extends 360° around the inlet face 11 of the porous substrate 10. Each semi-circular element 32, 33 may have its own gas inlet 31a, 31b that may be supplied from a common gas supply 31.

The ring air blade 30 may have a gas outlet 35 that extends around the inner circumferential wall of each semi-circular element 32, 33 and is orientated generally radially inwards as shown in Figure 3. Thus, as shown by the arrows in Figure 2, gas entering each semi-circular element 32, 33 is guided around its element 32, 33 and exits generally radially so that gas is emitted around all or substantially all 360° of the ring air blade 30.

A lower surface 36 of the gas outlet 35 may be rounded to deflect, due to the Coanda effect, gas exiting the gas outlet 35 downwards towards the inlet face 11 as shown in Figure 3. Thus, a generally conical flow of air may be obtained.

The plane of the gas outlet 35 of the ring air blade 30 may be positioned between 1 and 10cm above the plane of the inlet face 11 as shown schematically in Figure 3 using the reference d.

In use, the porous substrate 10 is first located in the holder 2 such that the inlet face 11 is in communication with the inlet chamber 15 and the outlet face 12 is in communication with the vacuum generator, e.g. the vacuum cone 17. The upper and lower inflatable collars 3, 4 may be inflated to secure the porous substrate 10.

Next, a gas flow is established through the porous substrate 10 from the inlet face 11 to the outlet face 12 by using the vacuum generator to apply a pressure reduction to the outlet face 12 of the porous substrate 10.

Then dry powder is sprayed into or within the inlet chamber 15, e.g. using the spay nozzle 20, such that dry powder is entrained in the gas flow and passes through the inlet face 11 of the porous substrate 10 to contact the porous structure.

### Example

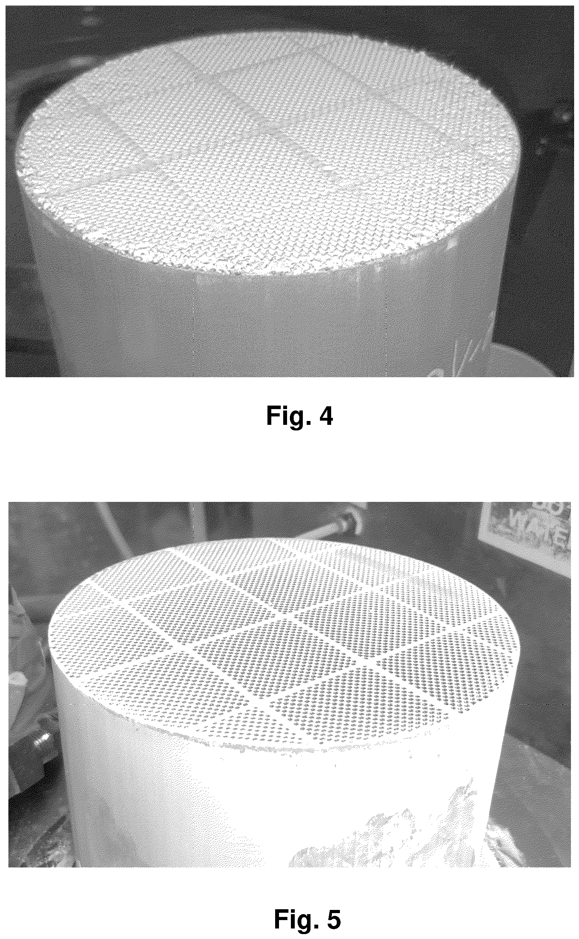

As shown in Figure 4, this process can result in a build-up of the dry powder on the inlet face 11, in particular on the ends of the walls separating the inlet channels and/or on any channels having their inlet end plugged.

Therefore the ring air blade 30 is activated to direct a gas flow downwards onto the inlet face 11 to blow off the dry powder accumulated on the inlet face 11 of the porous substrate 10. The vacuum generator remains active during activation of the ring air blade 30 such that the dry powder blown off the inlet face 11 is entrained in the gas flow and passes through the inlet face 11 of the porous substrate 10.

As shown in Figure 5, the result is that the inlet face 11 may be effectively cleaned of the build-up of dry powder.

The ring air blade 30 may be activated to blow off the dry powder after the spraying of the dry powder into or within the inlet chamber 15 has ceased (but while the vacuum generator is still running). Additionally or alternatively, the ring air blade 30 may be activated during the spraying of the dry powder into or within the inlet chamber 15.

The ring air blade 30 may be supplied with gas at a pressure of up to 8 bar, optionally at 3 to 8 bar, optionally at 3 to 6 bar, optionally at 1, 2, 3, 4, 5, 6, 7 or 8 bar. The ring air blade 30 may emit gas at a flow rate of greater than 150 litres per minute, optionally greater than 200 litres per minute, optionally greater than 250 litres per minute.

## Claims

1. A method of applying a dry powder to a porous substrate, the porous substrate having an inlet face and an outlet face with the inlet face and the outlet face being separated by a porous structure, the method comprising the steps of:
a) locating the porous substrate in a holder such that the inlet face is in communication with an inlet chamber and the outlet face is in communication with a vacuum generator;
b) establishing a gas flow through the porous substrate from the inlet face to the outlet face by using the vacuum generator to apply a pressure reduction to the outlet face of the porous substrate;
c) spraying the dry powder into or within the inlet chamber such that dry powder is entrained in the gas flow and passes through the inlet face of the porous substrate to contact the porous structure; and
d) activating a ring air blade to blow off dry powder accumulated on the inlet face of the porous substrate, wherein the vacuum generator remains active during activation of the ring air blade such that the dry powder blown off the inlet face is entrained in the gas flow and passes through the inlet face of the porous substrate.

2. The method of claim 1, wherein the ring air blade is activated to blow off dry powder after the spraying of the dry powder into or within the inlet chamber has ceased.

3. The method of claim 1 or claim 2, wherein the ring air blade is activated during the spraying of the dry powder into or within the inlet chamber.

4. The method of any preceding claim, wherein the ring air blade is orientated to direct a gas flow at a downward angle onto the inlet face of the porous substrate.

5. The method of any preceding claim, wherein the ring air blade emits a 360° or substantially 360° flow of gas.

6. The method of any preceding claim, wherein the plane of a gas outlet of the ring air blade is positioned between 1 and 10cm above the plane of the inlet face.

7. The method of any preceding claim, wherein the ring air blade is located within the inlet chamber or between the inlet chamber and the inlet face of the porous substrate.

8. The method of any preceding claim, wherein the ring air blade is supplied with gas at a pressure of up to 8 bar, optionally at 3 to 8 bar, optionally at 3 to 6 bar, optionally at 1, 2, 3, 4, 5, 6, 7 or 8 bar.

9. The method of any preceding claim, wherein the ring air blade emits gas at a flow rate of greater than 150 litres per minute, optionally greater than 200 litres per minute, optionally greater than 250 litres per minute.

10. The method of any preceding claim, wherein the dry powder is sprayed into or within the inlet chamber using a spray device, optionally a spray nozzle.

11. The method of claim 10, wherein the spray device is located at a distance of 50 to 250cm from the inlet face, optionally at a distance of 50 to 200cm, optionally at a distance of 100 to 200cm, optionally at a distance of 150 to 200cm, optionally at a distance of 200cm from the inlet face.

12. Apparatus for applying a dry powder to a porous substrate, the porous substrate having an inlet face and an outlet face with the inlet face and the outlet face being separated by a porous structure, the apparatus comprising:
a) a holder for holding the porous substrate;
b) an inlet chamber in communication with the inlet face;
c) a vacuum generator in communication with the outlet face for establishing a gas flow through the porous substrate from the inlet face to the outlet face;
d) a spray device for spraying the dry powder into or within the inlet chamber; and
e) a ring air blade.

13. The apparatus of claim 12, wherein the ring air blade is orientated to direct a gas flow at a downward angle onto the inlet face of the porous substrate, while the porous substrate is located in the holder, to blow off dry powder that may accumulate on the inlet face of the porous substrate.

14. The apparatus of claim 12 or claim 13, wherein the ring air blade is configured to emit a 360° or substantially 360° flow of gas.

15. The apparatus of claim 12 or claim 14, wherein the plane of a gas outlet of the ring air blade is positioned between 1 and 10cm above the plane of the inlet face.
